# EUROPEAN PATENT APPLICATION

(11) **EP 2 644 421 A1**
(43) Date of publication of application: **02.10.2013**
(21) Application number: 12162283.1
(22) Date of filing: 29.03.2012
(51) Int. Cl.: B60J 5/06

(54) **Carrier vehicle, theft-proof canvas and theft-proof strap**

(71) Applicant: Industrie- en Handelsonderneming Roffelsen B.V., 5704 RC Helmond (NL)
(72) Inventor: Roffelsen, Frederik Johannes Christophorus, 5364 NW Escharen (NL); Roffelsen, Mark, 5652 JW Eindhoven (NL)
(74) Representative: Jilderda, Anne Ayolt

(57) **Abstract**

A carrier vehicle comprises a loading space (20) bounded by canvas (24). The canvas lies against a frame (22) and thereby defines a spatial periphery of the loading space. Attached to a main surface of the canvas is a strap (40) comprising a flexible, monolithic strap body of plastic with a core which is wholly enclosed by the body and in which a theft-proof member (50) extends over at least substantially the full length of the body. The strap body comprises on either side of the core a lateral wing (42) with which the body is firmly connected to the canvas (24).

## Description

The present invention relates to a carrier vehicle with a loading space bounded by canvas, which canvas lies against a frame and thereby defines a spatial periphery of the loading space. The invention moreover relates to a theft-proof strap and a theft-proof canvas.

Carrier vehicles can be of diverse nature within the context of the invention, varying from box trucks, trailers, semi-trailers and trailer combinations, together referred to below as trucks, to railway goods wagons and cargo ships. Trucks in particular are nowadays increasingly the victim of robbery and theft. This occurs particularly in parking areas and at filling stations were the truck, often with valuable cargo, has stopped. Trucks with a loading space bounded only by a canvas stretched on a frame are a particularly easy target in this respect. This is because it is relatively easy to create a passage in the canvas with a sharp knife or the like, after which the cargo is freely accessible.

The present invention has for its object, among others, to provide a carrier vehicle, canvas and strap of the type described in the preamble which at least significantly obviate this drawback in practical manner.

In order to achieve the stated object a carrier vehicle of the type described in the preamble has the feature according to the invention that attached to a main surface of the canvas is at least one strap comprising a flexible, monolithic strap body of plastic with a core which is wholly enclosed by the body and in which a theft-proof member extends over at least substantially the full length of the strap body, which strap body comprises on either side of the core a lateral wing with which the strap body is firmly connected to the canvas. Because the canvas is thus reinforced with the strap incorporating a theft-proof member, a reinforced canvas is created which is less easy or even impossible to cut open with a knife or the like. An average thief or attacker will hereby be discouraged more quickly and lose interest in the carrier vehicle. Because the strap is embodied as a monolithic strap body, i.e. as one unitary whole, in which the theft-proof member is incorporated as core, it can not only be manufactured in particularly practical manner, but can also be attached as one whole with both wings to the surface of the canvas in particularly practical manner. Non-reinforced canvas can thus be covered with this strap in relatively simple manner and taking little time for effective reinforcement thereof.

A theft-proof strap comprises for this purpose according to the invention a plastic monolithic strap body which can be rolled up and which has over at least substantially a full length thereof a core which is wholly enclosed by the strap body and in which extends a theft-proof member, which strap body comprises a lateral wing on either side of the core over at least substantially a full length thereof. A theft-proof canvas has in this respect according to the invention a main surface to which such a theft-proof strap is attached in a system of strips, which strips extend at least substantially over a full length from a first lateral side of the canvas to a second lateral side of the canvas.

Use is advantageously made of an extrusion technique for manufacture of the strap. Particular embodiments of the carrier vehicle and the strap according to the invention therefore have the feature that the strap body comprises an extrusion body which is moulded round the theft-proof member by extrusion.

The theft-proof member can be manufactured per se from various materials. What is important is that the member on the one hand has sufficient flexibility and bendability that it can be rolled up and easily applied to the canvas, and on the other is strong enough to withstand action with a knife or the like. Some synthetic fibres, such as aramid fibres, are suitable in this respect. From a cost viewpoint further particular embodiments of the carrier vehicle and the strap according to the invention have the feature however that the theft-proof member comprises a theft-proof wire, in particular a wound metal wire. When sufficiently thick, a wound metal wire, such as a wound steel wire, provides an effective barrier to a sharp object such as a knife, but is generally considerably cheaper than the stated high-grade synthetic fibres. Because the wire is as it were moulded and embedded into the surrounding plastic strap body, it does not per se require further preservation treatment.

With a view to a durable and easy attachment, preferred embodiments of the carrier vehicle and of the canvas according to the invention have the feature that the same, or at least a similar plastic is applied for at least a top layer of the canvas and for the strap, wherein the plastic more particularly comprises polyvinyl chloride. By thus making use of the same, or at least similar plastics for both components, a good attachment can for instance be realized in reliable and practical manner by mutual fusion or adhesion.

For an optimal protection against theft, further preferred embodiments of the carrier vehicle and the canvas according to the invention have the feature that the at least one strap comprises a system, in particular a network, of a number of mutually intersecting strips attached to the main surface of the canvas. A knife or other sharp object will thus always strike one of the strips of the strap, irrespective of the direction of penetration, and be stopped thereby.

The invention will now be further elucidated on the basis of an exemplary embodiment and an accompanying drawing. In the drawing:
- figure 1: shows a front view of an exemplary embodiment of a truck according to the invention;
- figure 2: shows a top view of an exemplary embodiment of a strap according to the invention;
- figure 3: shows a cross-section along line III-III of the strap of figure 2;
- figure 4: shows a side view of the truck of figure 1 reinforced with the strap of figure 2; and
- figure 5: shows a detail view of an exemplary embodiment of canvas according to the invention as applied in the truck of figure 4.

The figures are here otherwise purely schematic and not drawn to scale. For the sake of clarity some dimensions in particular may be exaggerated to greater or lesser extent. Corresponding parts are designated in the figures with the same reference numeral.

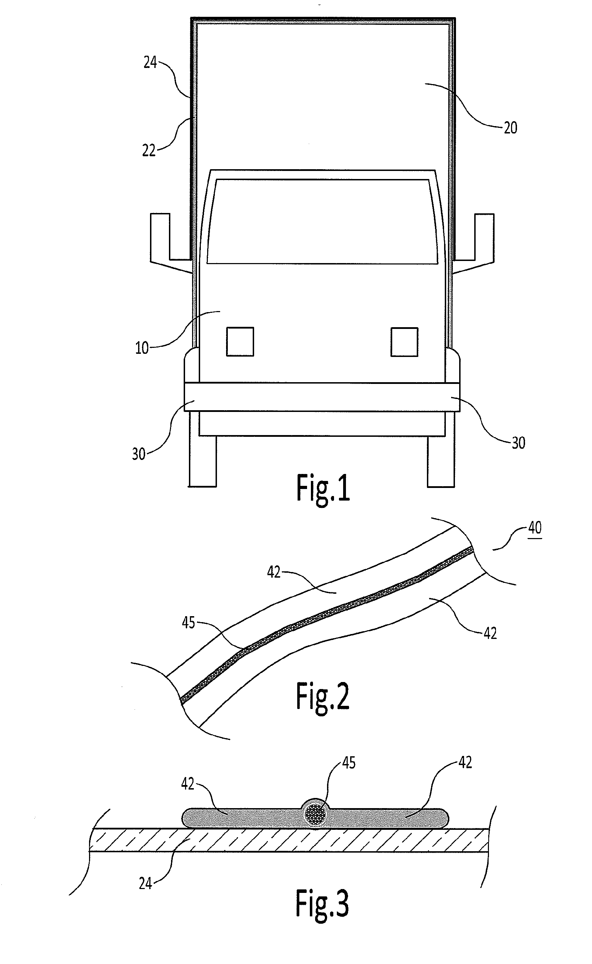

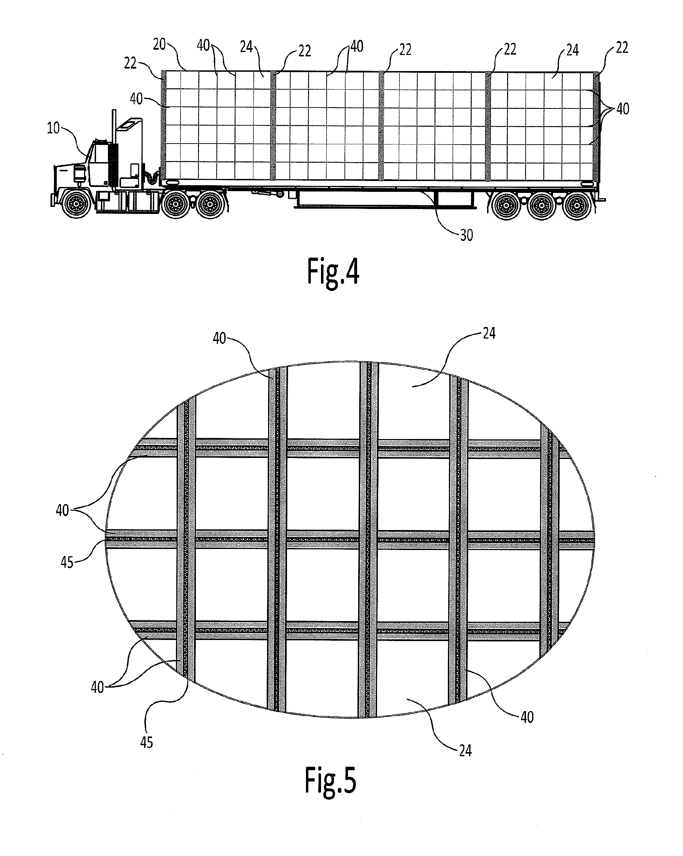

The truck shown in figure 1 comprises a driver's cab 10 and a loading space 20 lying therebehind, which are both placed on a mobile chassis 30. This can be a box truck, wherein the cab and the loading space are carried by the same chassis, or a traction unit with semi-trailer as shown in figure 4. The present invention can also be applied to an optionally drawn trailer or other types of carrier vehicle as stated above. Each of these have a loading space which is bounded by a frame 22 on which a canvas tilt 24 is arranged. Use can be made of diverse fabric materials for the canvas. A very common material also applied here is a layered foil, several millimetres thick, having on either side a top layer of a suitable plastic, such as for instance polyvinyl chloride, polyethylene or polyester, with a technical textile fabric therebetween. An appropriate printing is usually provided on a visible side thereof. Instead of such a laminate, use can however also be made of a single-layer foil of such a plastic providing sufficient (tensile) strength in combination with watertightness.

In order to secure the loading space of such a carrier vehicle against theft, the canvas is reinforced according to the invention in that a theft-proof strap of the type as shown in figures 2 and 3 is arranged thereon. This strap comprises an elongate, flexible, monolithic plastic strap body 40 with a central core extending over a full length therein and being wholly enclosed by the strap body. Situated in the core is a theft-proof member in the form of a wound wire 45, which likewise extends here over at least substantially the full length of strap body 40.

Strap body 40 is separated from an endless extrusion profile obtained by extrusion, wherein wire 45 has been simultaneously cast so as to be wholly enclosed by plastic and is moulded therein. The plastic is advantageously adapted to the material of a top layer of canvas 24, which in this embodiment is manufactured from PVC. A non-transparent coloured foil will normally be used here for the canvas, while for strap 40 use is made in this embodiment of a transparent, at least translucent PVC. Use is made for wire 45 of a wound steel wire with a thickness (diameter) of a millimetre to several millimetres. This guarantees on the one hand flexibility of the strap, which can thereby be rolled up and easily applied, while on the other such a wire is an effective barrier to a knife or other sharp object which attackers or thieves tend to use.

Strap 40 can be rolled up and can be formed into rolls of any desired length, for instance of several metres to several hundred metres. On either side of the core and the wire 45 extending therein the strap comprises a pair of lateral wings 42 with a thickness, depending on the application, of several tenths of a millimetre to several millimetres. Wings 42 each have a width of several millimetres to several centimetres as required. Use is made in this example of a strap with a width of about 25 millimetres.

Owing to the relatively large lateral surface area of wings 42 the strap allows of extremely rapid and reliable attachment to canvas 24 in usual manner by adhesion or fusion. Strap 40 is arranged here over a full length in strips extending from a first lateral side of canvas 24 to a second, particularly opposite, lateral side. The strap is particularly arranged here in a system or network of mutually intersecting strips with a mutual pitch in the order of 10 centimetres, as for instance shown by way of example in figures 4 and 5. All in all an effective reinforcement of the canvas is hereby obtained which will withstand the action of a knife or other sharp object in all directions.

Although the invention has been further elucidated above on the basis of only a single exemplary embodiment, it will be apparent that the invention is by no means limited thereto. On the contrary, many variations and embodiments are still possible within the scope of the invention for the person with ordinary skill in the art.

## Claims

1. Carrier vehicle with a loading space bounded by canvas, which canvas lies against a frame and thereby defines a spatial periphery of the loading space, **characterized in that** attached to a main surface of the canvas is at least one strap comprising a flexible, monolithic strap body of plastic with a core which is wholly enclosed by the body and in which a theft-proof member extends over at least substantially the full length of the strap body, which strap body comprises on either side of the core a lateral wing with which the strap body is firmly connected to the canvas.

2. Carrier vehicle as claimed in claim 1, **characterized in that** the strap body comprises an extrusion body which is moulded round the theft-proof member by extrusion.

3. Carrier vehicle as claimed in claim 1 or 2, **characterized in that** the theft-proof member comprises a theft-proof wire, in particular a wound metal wire.

4. Carrier vehicle as claimed in one or more of the foregoing claims, **characterized in that** the same, or at least a similar plastic, in particular polyvinyl chloride, is applied for at least a top layer of the canvas and for the strap.

5. Carrier vehicle as claimed in claim 4, **characterized in that** the plastic comprises polyvinyl chloride.

6. Carrier vehicle as claimed in one or more of the foregoing claims, **characterized in that** the at least one strap comprises a system, in particular a network, of a number of mutually intersecting strips attached to the main surface of the canvas.

7. Theft-proof strap comprising a monolithic plastic strap body which can be rolled up and which has over at least substantially a full length thereof a core which is wholly enclosed by the strap body and in which extends a theft-proof member, which strap body comprises a lateral wing on either side of the core over at least substantially a full length thereof.

8. Theft-proof strap as claimed in claim 7, **characterized in that** the strap body comprises an extrusion body which is moulded round the theft-proof member by extrusion.

9. Theft-proof strap as claimed in claim 7 or 8, **characterized in that** the theft-proof member comprises a wire, in particular a wound metal wire.

10. Theft-proof strap as claimed in claim 7, 8 or 9, **characterized in that** the strap body comprises a plastic, and is composed particularly of polyvinyl chloride.

11. Theft-proof canvas with a main surface to which a theft-proof strap as claimed in one or more of the claims 7 to 10 is attached in a system of strips, which strips extend at least substantially over a full length from a first lateral side of the canvas to a second lateral side of the canvas.

12. Theft-proof canvas as claimed in claim 11, **characterized in that** the system of strips comprises a network of mutually intersecting strips, which strips extend at least substantially over a full length from a first lateral side of the canvas to an opposite second lateral side of the canvas.

13. Theft-proof canvas as claimed in claim 11 or 12, **characterized in that** the same, or at least a similar plastic, in particular polyvinyl chloride, is applied for at least a top layer of the canvas and for the strap.
